# EUROPÄISCHE PATENTSCHRIFT

(11) **EP 3 390 017 B1**
(45) Veröffentlichungstag und Bekanntmachung des Hinweises auf die Patenterteilung: **26.08.2020**
(21) Anmeldenummer: 16809091.8
(22) Anmeldetag: 14.12.2016
(51) Int. Cl.: B29C 70/20, B29B 11/16, B65G 47/244

(54) **VORRICHTUNG UND VERFAHREN ZUR HERSTELLUNG EINER HALBZEUGBAHN**
METHOD AND DEVICE FOR CONNECTING FIBRE-REINFORCED WEB BODIES
PROCÉDÉ ET DISPOSITIF D'ASSEMBLAGE DE TOILES RENFORCÉES PAR DES FIBRES

(30) Priorität: 17.12.2015 EP 15200643
(43) Veröffentlichungstag der Anmeldung: 24.10.2018
(73) Patentinhaber: Covestro Deutschland AG, 51373 Leverkusen (DE)
(72) Erfinder: KNAUPP, Matthias, 40764 Langenfeld (DE); GRIMM, Thomas, 50765 Köln (DE); BÖRGER, Henning, 91459 Markt Erlbach (DE)
(74) Vertreter: Levpat
(86) Internationale Anmeldenummer: PCT/EP2016/080864
(87) Internationale Veröffentlichungsnummer: WO 2017/102769

(56) Entgegenhaltungen:
- EP-A1- 2 631 049
- JP-A- 2003 251 711
- US-A1- 2010 071 844

## Beschreibung

Gegenstand der vorliegenden Erfindung ist eine Vorrichtung und ein Verfahren zur semi-kontinuierlichen Herstellung einer Halbzeugbahn aufgebaut aus unidirektional endlosfaserverstärkten Bahnteilstücken sowie ein Verfahren zur Herstellung dieser Halbzeugbahn, wobei die Fasern in einer Matrix aus Polycarbonat eingebettet und in der fertigen Halbzeugbahn in einem Winkel x mit einem Betrag ungleich 0° bis einschließlich 90° zur längsten Achse der fertigen Halbzeugbahn ausgerichtet sind.

Nachfolgend wird diese fertige Halbzeugbahn auch "x°-Tape" genannt.

Tapes, bei denen die Fasern in der Halbzeugbahn in einem Winkel x gleich 0° zur längsten Achse der Halbzeugbahn ausgerichtet sind, werden nachfolgend kurz "0°-Tape" genannt. Eine Verwendung dieser 0°-Tapes ist die als Vorprodukt zur Herstellung von x°-Tapes.

Der Ausdruck "Tape" wird verwendet, wenn sowohl 0°-Tapes als auch x°-Tapes gemeint sind. Die langen Seiten der Tapes verlaufen parallel zueinander.

Unter semi-kontinuierlicher Herstellung wird im Sinne der vorliegenden Erfindung ein Herstellverfahren verstanden, das sowohl Verfahrensschritte aufweist, die kontinuierlich ablaufen oder ausgeführt werden, als auch solche, die diskontinuierlich ablaufen oder ausgeführt werden.

Das auf der erfindungsgemäßen Vorrichtung erfindungsgemäß hergestellte x°-Tape zeichnet sich unter anderem dadurch aus, dass die Fasern nicht wie bei 0°-Tapes in 0°-Richtung zur längsten Achse des Tapes liegen, sondern in einem Winkel x zur Vorschubrichtung ausgerichtet sind, wobei der Winkel x ungleich 0° ist. Die längste Achse eines Tapes wird auch Laufrichtung genannt. Unter "endlosfaserverstärkt" wird verstanden, dass die Länge der verstärkenden Faser im Wesentlichen der Abmessung des zu verstärkenden Tapes in der Ausrichtung der Faser entspricht. Unter "unidirektional" im Zusammenhang mit "Faser" wird verstanden, dass die Fasern im Tape in nur einer Richtung ausgerichtet sind.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der aus einem Matrixmaterial besteht, in dem Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer-, Basalt-, oder Naturfasern zum Einsatz kommen. Als Matrixmaterial werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv. Thermoplastbasierte Verbundwerkstoffe hingegen werden häufig, soweit sie als bereits vollkonsolidierte Halbzeuge vorliegen, z.B. als endlosfaserverstärkte Platten oder Profile, bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Als Verstärkungsmaterial werden im Wesentlichen textile Halbzeuge wie Gewebe, mehrlagige Gelege oder Non-wovens (z.B. Vliese, Wirrfasermatten etc.) verwendet. Diese Formen der Faserverstärkung zeichnen sich dadurch aus, dass bereits im textilen Halbzeug die Ausrichtung der Faser - und somit der Kraftpfade im späteren Bauteil - festgelegt ist. Dies ermöglicht zwar die direkte Herstellung eines multidirektional verstärkten Verbundwerkstoffes, hat aber Nachteile hinsichtlich der Flexibilität des Lagenaufbaus, der mechanischen Eigenschaften und der Wirtschaftlichkeit. Bei thermoplastbasierten Systemen werden diese textilen Halbzeuge üblicher Weise unter Druck und Temperatur mit Polymer imprägniert und anschließend als ausgehärtete Platte zugeschnitten und weiterverarbeitet.

Neben diesen bereits etablierten Systemen auf Basis von textilen Halbzeugen gewinnen thermoplastbasierte Tapes zunehmend an Bedeutung. Diese bieten Vorteile in der Wirtschaftlichkeit, da der Prozessschritt der textilen Halbzeugherstellung eingespart werden kann. Diese thermoplastbasierten Tapes eignen sich zur Herstellung von mehrlagigen Aufbauten, insbesondere auch zur Herstellung von multidirektionalen Aufbauten.

Ein Verfahren und eine Vorrichtung zur Herstellung einer thermoplastbasierten Halbzeugbahn, die mit unidirektional ausgerichteten Endlosfasern verstärkt ist, sind in WO 2012 123 302 A1, deren Offenbarung hiermit vollumfänglich in die Beschreibung der vorliegenden Erfindung mit einbezogen wird, beschrieben. Mit dem offenbarten Verfahren bzw. mit der offenbarten Vorrichtung wird eine faserverstärkte Halbzeugbahn erhalten, bei der die Endlosfasern in 0°-Richtung zur Laufrichtung der Vorratsbahn ausgerichtet sind.

Ein Verfahren und eine Vorrichtung zur Herstellung eines unidirektional endlosfaserverstärkten Tapes sind auch in EP 2 631 049 A1, deren Offenbarung hiermit ebenfalls vollumfänglich in die Beschreibung der vorliegenden Erfindung mit einbezogen wird, beschrieben.

Bei dem in EP 2 631 049 A1 offenbarten Verfahren werden zur Herstellung eines x°-Tapes von einer Vorratsbahn, die eine Hauptrichtung, eine Kunststoffmatrix und eine Vielzahl von unidirektional gerichtet festgelegten Fasern aufweist, die einen Winkel gleich 0° mit der Laufrichtung einschließen, Segmente abgetrennt, diese Segmente nebeneinander angeordnet, so dass ihre parallel zur Laufrichtung verlaufenden Längskanten parallel zueinander und benachbart sind und den vorbestimmten Winkel mit der Längsrichtung einschließen, und benachbarte Segmente im Bereich ihrer Längskanten miteinander verbunden sind. Die Vorratsbahn entspricht damit einem 0°-Tape, ein Segment einem Bahnteilstück. Im x°-Tape sind die Fasern dann in einem Winkel x ungleich 0° zur Laufrichtung des x°-Tapes angeordnet.

Die in EP 2 631 049 A1 offenbarte Vorrichtung umfasst eine Spenderanordnung zum Ausgeben von Segmenten der Vorratsbahn, die eine Hauptrichtung, eine Kunststoffmatrix und eine Vielzahl von unidirektional gerichtet festgelegten Fasern aufweisen, die einen Winkel gleich 0° mit der Hauptrichtung einschließen, eine Ausrichteinrichtung zum Anordnen der Segmente nebeneinander, so dass ihre parallel zur Hauptrichtung verlaufenden Längskanten parallel zueinander und benachbart sind und einen vorbestimmten Winkel (a) mit der Längsrichtung einschließen, und eine Verbindungseinrichtung zum Verbinden der benachbarten Segmente im Bereich ihrer Längskanten.

Nachteilig bei der in EP 2 631 049 A1 offenbarten Vorrichtung ist, dass die Spenderanordnung und die Ausrichteanordnung - von oben betrachtet - in einem Winkel von 180° vermindert um den vorbestimmten Winkel (a) zueinander angeordnet werden müssen, damit erreicht wird, dass die Segmente so verbunden werden, dass im x°-Tape die Fasern eine Ausrichtung von ungleich 0° zur längsten Laufrichtung des x°-Tapes aufweisen. Das bedeutet in anderen Worten, dass die Vorrichtung nicht eine durchgehend gerade Linie bildet, sondern die Spenderanordnung des Materials im Winkel (a) zur Ausrichteanordnung angeordnet ist, die Vorrichtung - bildlich gesprochen - also einen Knick in der Anordnung aufweist.

Das wiederum hat den Nachteil, dass eine solche Vorrichtung beispielsweise in einer Maschinenhalle wesentlich mehr Platz benötigt. Dies gilt vor allem dann, wenn mehrere Vorrichtungen dieser Art in einer Maschinenhalle untergebracht werden sollen.

Zusätzlich nachteilig wirkt sich bei dieser Art der Vorrichtung aus, dass zur Einstellung verschiedener Winkel (a) der Fasern zur Laufrichtung auch der Winkel zwischen der Spender- und der Ausrichteanordnung entsprechend verändert werden muss. Dies ist zum einen arbeitsaufwändig und erhöht den konstruktiven Aufwand, zum anderen wird das System fehleranfälliger und vergrößert den angesprochenen Platznachteil noch mehr.

Nachteilig am Verfahren ist dabei, dass sich die Vorschubrichtung der Segmente ändert. Dies macht das Verfahren fehleranfälliger, unter anderem beim zum Verbinden der benachbarten Segmente im Bereich ihrer Längskanten, und kann zu Diskontinuitäten und Verzögerungen in der Herstellung des x°-Tapes führen.

Auch werden mit der in EP 2 631 049 A1 offenbarten Vorrichtung keine Tapes mit dem Thermoplasten Polycarbonat als Matrixmaterial hergestellt. Einer der Gründe dafür ist die genannte Fehleranfälligkeit des Verfahrens zur Herstellung von Tapes mit der in EP 2 631 049 A1 offenbarten Vorrichtung, insbesondere beim Verbinden der benachbarten Segmente im Bereich ihrer Längskanten.

JP2003251711A offenbart eine Vorrichtung, mit der eine Halbzeugbahn hergestellt werden kann, wobei sich die Vorschubrichtung der Segmente nicht ändert. Jedoch ist diese Vorrichtung auf die Herstellung von Autoreifen und Stahlgürteln von Autoreifen ausgelegt und daher nicht für Herstellung von x°-Tapes aus einer Vorratsbahn geeignet, die nur eine geringe Dicke aufweist, beispielsweise eine Dicke von 100 bis 350 µm, oder gar nur von 120 bis 200 µm.

Polycarbonate haben gegenüber den üblicherweise eingesetzten thermoplastischen Kunststoffen den Nachteil, dass sie wenig Veranlagung zum Kriechen aufweisen und somit bei konstanter Spannung zu Rissbildung neigen. Dies ist besonders beim Einsatz in Verbundwerkstoffen, die Endlosfasern enthalten, höchst problematisch; denn Verbundwerkstoffe, die in ihrer Kunststoffmatrix Endlosfasern enthalten, stehen durch die Endlosfasern unter einer konstanten Spannung. Aus diesem Grund spielten Polycarbonate in der Praxis als Kunststoffmatrix für solche Endlosfasern enthaltenden Verbundwerkstoffe bisher nur eine untergeordnete Rolle. Grundsätzlich ist es jedoch wünschenswert, das Einsatzgebiet von Polycarbonaten auch auf die Tapes auszuweiten, denn Polycarbonate weisen gegenüber den anderen üblichen thermoplastischen Kunststoffen, wie Polyamid oder Polypropylen, einen geringeren Volumenschwund beim Erstarren auf. Ferner weisen Polycarbonate im Vergleich zu anderen Thermoplasten eine höhere Glasübergangstemperatur Tg, eine höhere Wärmeformbeständigkeit und eine geringere Wasseraufnahme auf.

Um Polycarbonat der Herstellung von Tapes zugänglich zu machen, ist es daher insbesondere nötig, das Verbinden der benachbarten Segmente im Bereich ihrer Längskanten möglichst fehlerfrei auszuführen.

Mit Tapes mit Polycarbonat als Matrixmaterial ist es darüber hinaus möglich, einen Mehrschichtverbundwerkstoff bereit zu stellen, der eine ästhetisch ansprechende Oberfläche mit geringer Welligkeit mit gleichzeitig guten mechanischen Eigenschaften aufweist. So ein aus Tapes mit Polycarbonat als Matrixmaterial aufgebauter Mehrschichtverbundwerkstoff weist eine metallähnliche Haptik, Optik und Akustik auf.

Mit diesen Eigenschaften ist ein solcher Mehrschichtverbundwerkstoff auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Aufgabe der vorliegenden Erfindung ist es daher, die Nachteile des Stands der Technik zu überwinden.

Insbesondere ist es Aufgabe der vorliegenden Erfindung, eine Vorrichtung zur Verfügung zu stellen, mit der ein aus Bahnteilstücken aufgebautes x°-Tape hergestellt werden kann, bei dem die Fasern in einer Matrix aus Polycarbonat eingebettet sind und einen Winkel x mit einem Betrag ungleich 0° bis einschließlich 90° zur Laufrichtung des x°-Tapes aufweisen, wobei die Hauptkomponenten der Vorrichtung - von oben betrachtet, kurz: im Grundriss - so angeordnet sind, dass sie keinen Knick in der Anordnung aufweisen.

Weiter insbesondere ist es Aufgabe der vorliegenden Erfindung, eine Vorrichtung zur Verfügung zu stellen, mit der ein aus Bahnteilstücken aufgebautes x°-Tape hergestellt werden kann, bei dem die Fasern in einer Matrix aus Polycarbonat eingebettet sind und einen Winkel ungleich 0° zur Laufrichtung des x°-Tapes aufweisen, wobei die Hauptkomponenten der Vorrichtung so angeordnet sind, dass die Hauptachse der Vorrichtung im Grundriss eine gerade Linie bildet, so dass die Vorschubrichtung des 0°-Tapes, der daraus geschnittenen Bahnteilstücke und des x°-Tapes während der Herstellung desselben unverändert bleibt und mit der Laufrichtung des 0°- und x°-Tapes übereinstimmt. In anderen Worten, die Hauptachse der Vorrichtung bildet auf ihrer Standfläche eine gerade Linie.

Weiter insbesondere ist es Aufgabe der vorliegenden Erfindung, eine Vorrichtung zur Verfügung zu stellen, mit der im Vergleich zum Stand der Technik ein weniger fehleranfälliges Verbinden von benachbarten Bahnteilstücken von Tapes im Bereich ihrer Längskanten möglich ist und die es somit ermöglicht, ein aus Bahnteilstücken aufgebautes x°-Tape herzustellen, bei dem die Fasern in einer Matrix aus Polycarbonat eingebettet sind und einen Winkel ungleich 0° zur Laufrichtung des x°-Tapes aufweisen.

Gelöst wird die Aufgabe durch eine Vorrichtung zur semi-kontinuierlichen Herstellung eines x°-Tapes, das eine Halbzeugbahn aufgebaut aus unidirektional endlosfaserverstärkten Bahnteilstücken ist, wobei die Fasern Glas- oder Carbonfasern oder Polymerfasern sind und in dieser Halbzeugbahn in einer Matrix aus Polycarbonat eingebettet und in einem Winkel x mit einem Betrag ungleich 0° bis einschließlich 90° zur Laufrichtung des x°-Tapes ausgerichtet sind, umfassend folgende Hauptkomponenten:
(A) eine Schneideinrichtung;
(B) eine Handlingeinrichtung;
(C) eine Verbindeeinrichtung,
die in der Vorrichtung in der oben aufgeführten Reihenfolge aufeinander folgen, wobei die Hauptkomponenten so angeordnet sind, dass die Hauptachse der Vorrichtung im Grundriss eine gerade Linie bildet,
wobei die Handlingeinrichtung (B) dazu geeignet ist, die vom einem 0°-Tape abgeschnittenen Bahnteilstücke in der gleichen Ebene um den Betrag des Winkels x gedreht in Vorschubrichtung des 0°-Tapes so hintereinander zu legen, dass bei den Bahnteilstücken die Seiten gegenüber liegen, die beim 0°-Tape Bereiche der zueinander parallelen Außenseiten waren,
und wobei
das 0°-Tape eine Dicke von 100 bis 350 µm, bevorzugt von 120 bis 200 µm hat.

Der Schneideinrichtung (A) vorgeschaltet sind folgende Zusatzkomponenten:
(D) eine Abwickeleinrichtung;
(E) eine erste Speichereinheit (Akkumulator);
(F) eine Zuführeinrichtung.

Der Verbindeeinrichtung (C) nachgeschaltet sind folgende Zusatzkomponenten:
(G) eine Abzugseinrichtung;
(H) eine zweite Speichereinheit (Akkumulator);
(J) eine Aufwickeleinrichtung.

Damit ergibt sich in Vorschubrichtung folgende Reihenfolge der Haupt- und Zusatzkomponenten:
D-E-F-A-B-C-G-H-J.

Die Abwickeleinrichtung (D) kann beispielsweise eine Rolle umfassen, auf der das 0°-Tape aufgerollt ist. Andere Ausführungen der Abwickeleinrichtung (D) sind jedoch auch möglich. Das 0°-Tape hat in der Regel in Laufrichtung eine Länge von 100 bis zu 3000 m, eine Breite von 60 bis 2100 mm, bevorzugt von 500 bis 1000 mm, besonders bevorzugt von 600 bis 800 mm.

Erfindungsgemäß hat das 0°-Tape - wie bereits beschrieben - eine Dicke von 100 bis 350 µm, bevorzugt von 120 bis 200 µm.

Jedoch kann auf der erfindungsgemäßen Vorrichtung auch ein anders dimensioniertes 0°-Tape verarbeitet werden.

Wie bereits dargestellt, sind solche 0°-Tapes mit thermoplastischer Matrix und deren Herstellung grundsätzlich bekannt, beispielsweise aus EP 2 631 049 A1. Unidirektional endlosfaserverstärkte Halbzeugbahnen, bei denen die Fasern in einem Winkel von 0° in Laufrichtung dieser Halbzeugbahn ausgerichtet sind, und langen Kanten der Halbzeugbahn parallel zueinander verlaufen, und die andere Abmessungen aufweisen, können jedoch ebenfalls eingesetzt werden.

Bevorzugt sind dabei 0°-Tapes, bei denen das Matrixmaterial zu mindestens 50 Gew.-%, vorzugsweise mindestens 60 %, bevorzugt mindestens 70 Gew.-%, besonders bevorzugt zu mindestens 90 Gew.-%, ganz besonders bevorzugt mindestens 95 Gew.-%, insbesondere zu mindestens 97 Gew.-%, aus einem auf Polycarbonat basierenden Thermoplasten besteht. Anders ausgedrückt kann ein auf Polycarbonat basierender Thermoplast im Rahmen der vorliegenden Erfindung höchstens 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-% einen oder mehrere von Polycarbonat verschiedene Bestandteile als Blendpartner enthalten.

Bevorzugt besteht der auf Polycarbonat basierende Thermoplast im Wesentlichen, insbesondere zu 100 Gew.-% aus Polycarbonat.

Wenn hier von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3 '-Bis-(4-hydroxyphenyl)-phthalimide oder 2-Aryl-3,3 '-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich können optional bezogen auf das Gewicht des Thermoplasten bis zu 50,0 Gew.-%, bevorzugt 0,2 bis 40 Gew.-%, besonders bevorzugt 0,10 bis 30,0 Gew.-% sonstige übliche Additive enthalten sein.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Allgemein kann es sinnvoll sein, dem Polycarbonat, das für die Matrix verwendet wird, Thermostabilisatoren und Fließverbesserer zuzusetzen, sofern diese nicht das Molekulargewicht des Polycarbonats verringern und/oder die Vikat-Temperatur erniedrigen.

Als Material für die Fasern kommen sowohl Naturfasern, z.B. faserförmige Minerale oder pflanzliche Fasern, als auch künstlich hergestellte Fasern, z.B. anorganische Synthesefasern oder organische Synthesefasern, in Betracht. Bevorzugt sind - wie bereits beschrieben - erfindungsgemäß Glas-, Carbon-, oder Polymerfasern, wiederum insbesondere bevorzugt Glas- oder Carbonfasern.

Ganz besonders bevorzugt werden Glasfasern mit einem E-Modul von größer 70 GPa, bevorzugt größer 80 GPa, besonders bevorzugt größer 90 GPa oder Carbonfasern mit einem E-Modul von größer 240 GPa, bevorzugt größer 245 GPa, besonders bevorzugt von 250 GPa oder mehr eingesetzt. Insbesondere sind Carbonfasern mit diesen vorgenannten E-Modulen bevorzugt. Solche Carbonfasern sind beispielsweise unter der Bezeichnung Pyrofil von der Firma Mitsubishi Rayon CO., LtD. im Handel erhältlich.

Die Fasern sind in aller Regel mit einer sogenannten Schlichte beschichtet. Wird Polycarbonat als Matrixmaterial verwendet, so enthalten geeignete Systeme für Schlichten häufig einen Duroplasten, ein Silan, ein Epoxidharz oder ein Polyurethan. Es ist aber auch möglich, dass die Fasern oder ein Teil der Fasern keine Schlichte aufweisen.

Von dieser Abwickeleinrichtung (D) wird das 0°-Tape kontinuierlich abgewickelt und in Vorschubrichtung der Speichereinrichtung zugeführt. Die erste Speichereinheit (E) führt dann das 0°-Tape über die Zuführeinrichtung (F) der Schneideinrichtung (A) zu. Die erste Speichereinheit (E) kann beispielsweise mehrere translatorisch in Schwerkraftrichtung beweglich gelagerte Rollen aufweisen oder in anderer sinnvoller Weise ausgestaltet sein. Die Zuführeinrichtung (F) kann beispielsweise als Abrolleinrichtung, Förderband oder einer Laufrollenstrecke ausgeführt sein. Die Zuführeinrichtung (F) führt das 0°-Tape derart zu, dass die Laufrichtung des 0°-Tapes und die Vorschubrichtung der erfindungsgemäßen Vorrichtung übereinstimmen.

Das Schneiden des 0°-Tapes ist ein diskontinuierlicher Vorgang. Daher wird der kontinuierliche Vorschub des 0°-Tapes in bestimmten Intervallen unterbrochen, um den Schneidvorgang so durchführen zu können, dass der Schnitt einer geraden Linie mit dem Winkel x zur Laufrichtung des 0°-Tapes entspricht. Die Schneideinrichtung (A) kann beispielsweise als Rollmesser, Schlagschere, Tafelschere, Guillotine, Hebelschere, Laser, Wasserstrahlschneideinrichtung, Fräse, Kappsäge, Bandsäge, Trennscheibe oder in einer anderen geeigneten Ausführungsform ausgebildet sein. Mit der Schneideinrichtung (A) werden vom 0°-Tape in einem vorbestimmten Winkel x zur Vorschubrichtung des 0°-Tapes Bahnteilstücke abgeschnitten, wobei der Vorschubrichtung der Winkel 0° zukommt. Der Betrag des Winkels x ist größer 0° und beträgt bis einschließlich 90°, wobei der Winkel x bevorzugt einen Betrag von 30°, 33°, 45°, 60°, 75° oder 90° hat; besonders bevorzugt hat der Winkel x einen Betrag von 90°. Wird der Winkel x im Uhrzeigersinn zur Vorschubrichtung bestimmt, so erhält der Wert des Winkels x ein negatives Vorzeichen, wird der Winkel x gegen den Uhrzeigersinn bestimmt, so erhält der Wert des Winkels x ein positives Vorzeichen, das nach allgemeiner Konvention aber nicht dargestellt wird. Dabei wird der Betrag des Winkels x so bestimmt, dass er durch einen möglichst geringen Betrag definiert ist. So entspräche ein Winkel x mit einem Wert von 135° einem Winkel x von mit einem Wert von -45°; es wird dann der Betrag des Winkels x von 45° angegeben; ein Winkel x mit einem Wert von 120° entspräche einem Winkel x mit einem Wert von -60°; es wird dann der Betrag des Winkels x von 60° angegeben.

Die Schneideinrichtung ist bevorzugt so ausgestaltet, dass mit ihr beliebige Winkel zwischen °0 und 90° sowohl mit als auch gegen den Uhrzeigersinn eingestellt werden können.

Den Wechsel vom kontinuierlichen zum diskontinuierlichen Vorschub führt die Zuführeinrichtung (F) durch, wobei die erste Speichereinheit (E) während der Unterbrechung des Vorschubs des 0°-Tapes das von der Abwickeleinrichtung (D) kontinuierlich zugeführte 0°-Tape zwischenspeichert. Die vom dem 0°-Tape abgeschnittenen Bahnteilstücke werden von der Handlingeinrichtung (B) in einem weiteren diskontinuierlichen Schritt in der gleichen Ebene um den Betrag des Winkels x gedreht und in Vorschubrichtung so hintereinander gelegt, dass bei den Bahnteilstücken nun die Seiten gegenüber liegen, die beim 0°-Tape Bereiche der zueinander parallelen Außenseiten waren. Die Bereiche, die beim 0°-Tape innerhalb desselben lagen, bilden nun die zueinander parallelen Außenseiten. Dadurch weisen auch die Fasern in den Bahnteilstücken eine Ausrichtung mit der Winkel x zur Vorschubrichtung auf.

Dabei ist zu beachten, dass die Handlingeinrichtung (B) die Bahnteilstücke in Vorschubrichtung so um den Betrag des Winkels x dreht, dass nach der Drehung um den Winkel x die Bereiche, die im 0°-Tape innerhalb desselben gelegen haben, nun parallel zur Vorschubrichtung liegen, während die die Seiten, die beim 0°-Tape Bereiche der zueinander parallelen Außenseiten waren, nun im mit dem Betrag des Winkels x zur Vorschubrichtung ausgerichtet sind.

Die Handlingeinrichtung (B) kann zum Beispiel als Robotergreifarm -oder -greifhand, Drehteller, drehbare Saugeinrichtung, Linearführungen mit Rotationsachse, oder in anderer geeigneter Weise ausgestaltet sein.

Der Handlingeinrichtung (B) folgt in Vorschubrichtung die Verbindeeinrichtung (C). In dieser werden in einem weiteren diskontinuierlichen Schritt die Bahnteilstücke stoffschlüssig unter Bildung des x°-Tapes so miteinander verbunden, dass die Seiten, die beim 0°-Tape Bereiche der zueinander parallelen Außenseiten waren, nun innerhalb des x°-Tapes liegen und die zueinander parallelen Außenseiten des x°-Tapes durch Bereiche gebildet werden, die beim 0°-Tape innerhalb desselben lagen. Im x°-Tape weisen die Fasern demnach auch eine Ausrichtung mit dem Betrag des Winkels x zur Vorschubrichtung auf.

Die Verbindeeinrichtung (C) kann als Schweißeinrichtung oder Klebeeinrichtung ausgestaltet sein. Bevorzugt ist sie als Schweißeinrichtung ausgestaltet, wobei der Schweißvorgang beispielsweise mittels Heißbalken, Laser, Heißluft, Infrarotstrahlung oder Ultraschall durchgeführt wird. Die Verbindung wird dabei erfindungsgemäß als Stoßverbindung ausgeführt, so dass es nicht zu einer Überlappung der Bahnteilstücke kommt, d.h. die Bahnteilstücke werden nur an den Flächen miteinander verbunden, die beim 0°-Tape Bereiche der zueinander parallelen Außenseiten waren, Bereiche der Ober- oder Unterseite des 0°-Tapes werden nicht in das Herstellen der Verbindung mit einbezogen.

Die Handlingeinrichtung (B) und/oder die Verbindeeinrichtung (C) kann bzw. können mit einer Positioniereinrichtung für die Bahnteilstücke ausgerüstet sein. Die Positioniereinrichtung ermöglicht im Besonderen ein im Vergleich zum Stand der Technik weniger fehleranfälliges Verbinden von benachbarten Bahnteilstücken von Tapes im Bereich ihrer Längskanten und ermöglicht es somit in besonders vorteilhafter Weise, ein aus Bahnteilstücken aufgebautes x°-Tape herzustellen, bei dem die Fasern in einer Matrix aus Polycarbonat eingebettet sind und einen Winkel ungleich 0° zur Laufrichtung des x°-Tapes aufweisen.

Der Verbindereinrichtung folgt in Vorschubrichtung eine Abzugseinrichtung (G), die das x°-Tape weitertransportiert. Dieser Weitertransport ist auf Grund der diskontinuierlichen Arbeiten der Verbindeeinrichtung (C) und des sich daraus ergebenden diskontinuierlichen Längenwachstums des x°-Tapes zunächst ebenfalls diskontinuierlich. Der Abzugseinrichtung (G) folgt dann eine zweite Speichereinheit (H), die den diskontinuierlichen Vorschub in einen kontinuierlichen Vorschub umwandelt. Diese zweite Speichehereinheit (H) kann in gleicher oder anderer Weise wie die erste Speichereinheit (E) ausgestaltet sein, die sich vor der Schneideeinrichtung befindet. Dem Speicher folgt eine Aufwickeleinrichtung (J), die das x°-Tape auf einen Kern wickelt.

Die erfindungsgemäße Vorrichtung ermöglicht, deren Hauptkomponenten so anzuordnen, dass sie in der Ebene der Standfläche eine gerade Linie bilden, so dass die Vorschubrichtungen des 0°-Tapes, der daraus geschnittenen Bahnteilstücke und des x°-Tapes während der Herstellung desselben gleich sind unverändert bleiben, und die Hauptachse der Vorrichtung eine gerade Linie bildet.

Insbesondere ermöglicht es die Handlingeinrichtung (B) der erfindungsgemäßen Vorrichtung, dass die Schneideinrichtung (A), die Handlingeinrichtung (B) und die Verbindeeinrichtung (C) in der Ebene der Standfläche eine gerade Linie bilden, so dass die Vorschubrichtungen des 0°-Tapes, der daraus geschnittenen Bahnteilstücke und des 0°-Tapes während der Herstellung desselben gleich sind unverändert bleiben. Durch diese Anordnung wird erreicht, dass gegenüber Anordnungen aus dem Stand der Technik weniger Platz gebraucht wird und leichter mehrere erfindungsgemäße Vorrichtungen in einer Maschinenhalle untergebracht werden können.

Außerdem muss bei der erfindungsgemäßen Vorrichtung zur Einstellung verschiedener Winkel x der Winkel zwischen der Schneideinrichtung (A) und Verbindungseinrichtung nicht mehr verändert werden, sondern es genügt, wenn die Handlingeinrichtung (B) die Segmente entsprechend dem geänderten Winkel x dreht. Dies spart Arbeit und schafft einen zusätzlichen Platzvorteil.

Besonders vorteilhaft ist es, wenn zusätzlich zu den Hauptkomponenten A bis C auch die Zuführeinrichtung (F) und Abzugseinrichtung (G) zusammen mit den Hauptkomponenten A bis C so angeordnet sind, dass die Hauptachse der Vorrichtung im Grundriss eine gerade Linie bildet, so dass die Vorschubrichtungen des 0°-Tapes, der daraus geschnittenen Bahnteilstücke und des x°-Tapes während der Herstellung desselben gleich sind unverändert bleiben. Diese Ausgestaltung der erfindungsgemäßen Vorrichtung ist besonders platzsparend und bei ihr kommt der Vorteil, dass zur Einstellung verschiedener Winkel x der Winkel zwischen der Schneideinrichtung (A) und Verbindungseinrichtung (C) nicht mehr verändert werden muss, besonders stark zum Tragen.

Ganz besonders vorteilhaft ist es, wenn alle Komponenten D - E - F - A - B - C - G - H - J so angeordnet sind, dass die Hauptachse der Vorrichtung im Grundriss eine gerade Linie bildet.

Der Einsatz der Handlingeinrichtung ermöglicht es, die Hauptkomponenten der erfindungsgemäßen Vorrichtung so anzuordnen, dass die Hauptachse der Vorrichtung im Grundriss eine gerade Linie bildet, so dass die Vorschubrichtungen des 0°-Tapes, der daraus geschnittenen Bahnteilstücke und des x°-Tapes während der Herstellung desselben gleich sind unverändert bleiben.

Die erfindungsgemäße Vorrichtung ermöglicht auch ein im Vergleich zum Stand der Technik weniger fehleranfälliges Verbinden von benachbarten Bahnteilstücken im Bereich ihrer Längskanten und ermöglicht somit, ein aus Bahnteilstücken aufgebautes x°-Tape herzustellen, bei dem die Fasern in einer Matrix aus Polycarbonat eingebettet sind und einen Winkel ungleich 0° zur Laufrichtung des x°-Tapes aufweisen.

Mit diesen x°-Tapes ist es möglich, einen Mehrschichtverbundwerkstoff herzustellen, der eine ästhetisch ansprechende Oberfläche mit geringer Welligkeit mit gleichzeitig guten mechanischen Eigenschaften aufweist. So ein aus Tapes mit Polycarbonat als Matrixmaterial aufgebauter Mehrschichtverbundwerkstoff weist eine metallähnliche Haptik, Optik und Akustik auf und ist daher auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Gegenstand der vorliegenden Erfindung ist auch ein Verfahren zur Herstellung einer Halbzeugbahn, in der die Fasern Glas- oder Carbonfasern oder Polymerfasern sind und in einer Matrix aus Polycarbonat eingebettet und in dieser Halbzeugbahn in einem Winkel x mit einem Betrag ungleich 0° bis einschließlich 90° zur Laufrichtung der fertigen Halbzeugbahn ausgerichtet sind, umfassend die

### folgenden Schritte:

(1) Schneiden des 0°-Tapes in Bahnteilstücke;
(2) Drehen der Bahnteilstücke um den Betrag des Winkels x;
(3) stoffschlüssiges Verbinden der Bahnteilstücke zum x°-Tape,
wobei die Vorschubrichtung des 0°-Tapes, der daraus geschnittenen Bahnteilstücke und des x°-Tapes während der Herstellung desselben unverändert gehalten wird,
und wobei
das 0°-Tape eine Dicke von 100 bis 350 µm, bevorzugt von 120 bis 200 µm hat.

Das erfindungsgemäße Verfahren wird bevorzugt auf der oben beschriebenen erfindungsgemäßen Vorrichtung durchgeführt.

Wie bereits dargestellt, ist dabei zu beachten, dass die Handlingeinrichtung (B) die Bahnteilstücke in Vorschubrichtung so um den Betrag des Winkels x dreht, dass nach der Drehung um den Winkel x die Bereiche, die im 0°-Tape innerhalb desselben gelegen haben, nun parallel zur Vorschubrichtung liegen, während die die Seiten, die beim 0°-Tape Bereiche der zueinander parallelen Außenseiten waren, nun im mit dem Betrag des Winkels x zur Vorschubrichtung ausgerichtet sind.

Das Verfahren ermöglicht es, die Hauptkomponenten der erfindungsgemäßen Vorrichtung so anzuordnen, dass die Hauptachse der Vorrichtung im Grundriss eine gerade Linie bildet, so dass die Vorschubrichtungen des 0°-Tapes, der daraus geschnittenen Bahnteilstücke und des x°-Tapes während der Herstellung desselben gleich sind unverändert bleiben.

Insbesondere Verfahrensschritt (2) ermöglicht es, die Hauptkomponenten der erfindungsgemäßen Vorrichtung so anzuordnen, dass deren Hauptachse im Grundriss eine gerade Linie bildet, so dass die Vorschubrichtungen des 0°-Tapes, der daraus geschnittenen Bahnteilstücke und des x°-Tapes während der Herstellung desselben gleich sind unverändert bleiben, und die Hauptachse der Vorrichtung eine gerade Linie bildet.

Dadurch wird erreicht, dass eine Vorrichtung, die das erfindungsgemäße Verfahren ausführt. gegenüber Anordnungen aus dem Stand der Technik weniger Platz braucht und daher leichter mehrere erfindungsgemäße Vorrichtungen in einer Maschinenhalle untergebracht werden können.

### Besonders vorteilhaft ist es, wenn auch die zusätzlichen Verfahrensschritte

(0) Zuführen des 0°-Tapes und
(4) Aufwickeln des x°-Tapes
   so ausgeführt werden, dass die Vorschubrichtung des 0°-Tapes, der daraus geschnittenen Bahnteilstücke und des x°-Tapes während der Herstellung desselben unverändert gehalten wird. Dabei werden der Verfahrensschritt (0) vor dem Verfahrensschritt (1) und der Verfahrensschritt (4) nach dem Verfahrensschritt (3) ausgeführt.

Diese Ausgestaltung des erfindungsgemäßen Verfahrens ermöglicht eine besonders platzsparende Anordnung der erfindungsgemäßen Vorrichtung und bei ihr kommt der Vorteil, dass zur Einstellung verschiedener Winkel x der Winkel zwischen der Schneideinrichtung (A) und Verbindungseinrichtung nicht mehr verändert werden muss, besonders stark zum Tragen.

Die Ausführung des erfindungsgemäßen Verfahrens ermöglicht auch ein im Vergleich zum Stand der Technik weniger fehleranfälliges Verbinden von benachbarten Bahnteilstücken im Bereich ihrer Längskanten und ermöglicht somit, ein aus Bahnteilstücken aufgebautes x°-Tape herzustellen, bei dem die Fasern in einer Matrix aus Polycarbonat eingebettet sind und einen Winkel ungleich 0° zur Laufrichtung des x°-Tapes aufweisen.

Mit diesen x°-Tapes ist es möglich, einen Mehrschichtverbundwerkstoff herzustellen, der eine ästhetisch ansprechende Oberfläche mit geringer Welligkeit mit gleichzeitig guten mechanischen Eigenschaften aufweist. So ein aus Tapes mit Polycarbonat als Matrixmaterial aufgebauter Mehrschichtverbundwerkstoff weist eine metallähnliche Haptik, Optik und Akustik auf und ist daher auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Zur Ausführung des erfindungsgemäßen Verfahrens wird bevorzugt die erfindungsgemäße Vorrichtung verwendet.

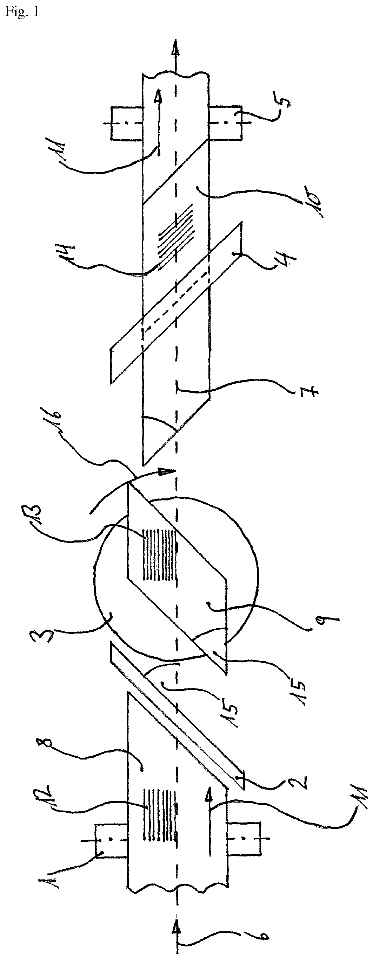

Fig. 1 zeigt in vereinfachter Form die erfindungsgemäße Vorrichtung, ohne dass die Erfindung eingeschränkt werden soll.

Dabei sind:
- 1: Zuführeinrichtung (F)
- 2: Schneideinrichtung (A)
- 3: Handlingeinrichtung (B)
- 4: Verbindeeinrichtung (C)
- 5: Abzugseinrichtung (G)
- 6: Vorschubrichtung
- 7: Hauptachse der erfindungsgemäßen Vorrichtung
- 8: 0°-Tape
- 9: Bahnteilstück
- 10: x°-Tape
- 11: Laufrichtung des 0°-Tapes bzw. x°-Tapes
- 12: Ausrichtung der Fasern im 0°-Tape
- 13: Ausrichtung der Fasern im Bahnteilstück
- 14: Ausrichtung der Fasern im x°-Tape
- 15: Winkel x
- 16: Richtung, in der das Bahnteilstück von der Handlingeinrichtung gedreht wird

## Patentansprüche

1. Vorrichtung zur semi-kontinuierlichen Herstellung eines x°-Tapes, das eine Halbzeugbahn aufgebaut aus unidirektional endlosfaserverstärkten Bahnteilstücken ist, wobei die Fasern Glas- oder Carbonfasern oder Polymerfasern sind und in dieser Halbzeugbahn in einer Matrix aus Polycarbonat eingebettet und in einem Winkel x mit einem Betrag ungleich 0° bis einschließlich 90° zur Laufrichtung des x°-Tapes ausgerichtet sind, umfassend folgende Hauptkomponenten:
(A) eine Schneideinrichtung;
(B) eine Handlingeinrichtung;
(C) eine Verbindeeinrichtung.
die in der Vorrichtung in der genannten Reihenfolge aufeinander folgen, wobei die Hauptkomponenten so angeordnet sind, dass die Hauptachse der Vorrichtung im Grundriss eine gerade Linie bildet,
wobei die Handlingeinrichtung (B) dazu geeignet ist, die vom einem 0°-Tape abgeschnittenen Bahnteilstücke in der gleichen Ebene um den Betrag des Winkels x gedreht in Vorschubrichtung des 0°-Tapes so hintereinander zu legen, dass bei den Bahnteilstücken die Seiten gegenüber liegen, die beim 0°-Tape Bereiche der zueinander parallelen Außenseiten waren, und die Verbindeeinrichtung (C) dazu geeignet ist, die Bahnteilstücke stoffschlüssig zum x°-Tape zu verbinden,
und wobei
das 0°-Tape eine Dicke von 100 bis 350 µm, bevorzugt von 120 bis 200 µm hat.

2. Vorrichtung nach Anspruch 1, **dadurch gekennzeichnet, dass** der Schneideinrichtung (A) eine Zuführeinrichtung (F), eine erste Speichereinheit (E) und eine Abwickeleinrichtung (D) vorgeschaltet sind und der Verbindeeinrichtung (C) eine Abzugseinrichtung (G), eine zweite Speichereinheit (H) und eine Aufwickeleinrichtung (J) nachgeschaltet sind, derart dass sich die Reihenfolge Abwickeleinrichtung (D) - Speichereinheit (E) - Zuführeinrichtung (F) - Schneideinrichtung (A) - Handlingeinrichtung (B) - Verbindeeinrichtung (C) - Abzugseinrichtung (G) - zweite Speichereinheit (H) - Aufwickeleinrichtung (J) ergibt.

3. Vorrichtung nach Anspruch 2, **dadurch gekennzeichnet, dass** die Hauptkomponenten (A) bis (C), die Zuführeinrichtung (F) und die Abzugseinrichtung (G) so angeordnet sind, dass die Hauptachse der Vorrichtung im Grundriss eine gerade Linie bildet.

4. Vorrichtung nach Anspruch 1, **dadurch gekennzeichnet, dass** die Handlingeinrichtung (B) als Robotergreifarm -oder -greifhand, Drehteller, und/oder drehbare Saugeinrichtung ausgestaltet ist.

5. Vorrichtung nach einem der vorhergehenden Ansprüche, **dadurch gekennzeichnet, dass** der Winkel x einen Betrag größer 0° und bis einschließlich 90° hat, bevorzugt der Winkel x einen Betrag von 30°, 33°, 45°, 60°, 75° oder 90°, besonders bevorzugt 90° hat.

6. Vorrichtung nach einem der vorhergehenden Ansprüche, **dadurch gekennzeichnet, dass** die Handlingeinrichtung (B) und/oder die Verbindeeinrichtung (C) mit einer Positioniereinrichtung für die Bahnteilstücke ausgerüstet ist bzw. sind.

7. Verfahren zur Herstellung eines x°-Tapes, das eine Halbzeugbahn aufgebaut aus unidirektional endlosfaserverstärkten Bahnteilstücken ist, wobei die Fasern Glas- oder Carbonfasern oder Polymerfasern sind und in einer Matrix aus Polycarbonat eingebettet und in dieser Halbzeugbahn in einem Winkel x mit einem Betrag ungleich 0° bis einschließlich 90° zur Laufrichtung des x°-Tapes ausgerichtet sind, umfassend folgende Verfahrensschritte:
(1) Schneiden des 0°-Tapes in Bahnteilstücke;
(2) Drehen der Bahnteilstücke um den Betrag des Winkels x;
(3) stoffschlüssiges Verbinden der Bahnteilstücke zum x°-Tape,
wobei die Vorschubrichtung des 0°-Tapes, der daraus geschnittenen Bahnteilstücke und des x°-Tapes während der Herstellung desselben unverändert gehalten wird,
und wobei
das 0°-Tape eine Dicke von 100 bis 350 µm, bevorzugt von 120 bis 200 µm hat,
und wobei
das Verfahren auf einer Vorrichtung nach einem der Ansprüche 1 bis 6 ausgeführt wird.

8. Verfahren nach Anspruch 7, **dadurch gekennzeichnet, dass** vor dem Verfahrensschritt (1) der Verfahrensschritt
(0) Zuführen des 0°-Tapes
und nach dem Verfahrensschritt (3) der Verfahrensschritt
(4) Aufwickeln des x°-Tapes
ausgeführt wird.

9. Verfahren nach Anspruch 8, **dadurch gekennzeichnet, dass** während der Verfahrensschritte (0) bis (4) die Vorschubrichtung des 0°-Tapes, der daraus geschnittenen Bahnteilstücke und des x°-Tapes während der Herstellung desselben unverändert gehalten wird.

## Claims

1. Apparatus for semicontinuous production of an x°-tape which is a semifinished sheeting constructed from unidirectionally endless-fibre-reinforced sheeting sections, wherein the fibres are glass or carbon fibres or polymer fibres and in this semifinished sheeting are embedded in a matrix of polycarbonate and aligned at an angle x having a magnitude from non-0° to 90° inclusive to the running direction of the x°-tape, comprising the following main components:
(A) a cutting device;
(B) a handling device;
(C) a joining device,
which follow one another in the above order in the apparatus, wherein the main components are arranged such that in plan view the main axis of the apparatus forms a straight line,
wherein the handling device (B) is suitable for laying the sheeting sections cut from a 0°-tape rotated in the same plane by the magnitude of the angle x one behind the other in the advancement direction of the 0°-tape such that in the sheeting sections the sides which in the 0°-tape were regions of the mutually parallel outsides are now disposed opposite one another and the joining device (C) is suitable for cohesively joining the sheeting sections to the x°-tape,
and wherein
the 0°-tape has a thickness of 100 to 350 µm, preferably of 120 to 200 µm.

2. Apparatus according to Claim 1, **characterized in that** the cutting device (A) has a feeding device (F), a first storage unit (E) and an unwinding device (D) arranged upstream of it and the joining device (C) has a take-off device (G), a second storage unit (H) and a winding-up device (J) arranged downstream of it such that the sequence unwinding device (D) - storage unit (E) - feeding device (F) - cutting device (A) - handling device (B) - joining device (C) - take-off device (G) - second storage unit (H) - winding-up device (J) results.

3. Apparatus according to Claim 2, **characterized in that** the main components (A) to (C), the feeding device (F) and the take-off device (G) are arranged such that the main axis of the apparatus forms a straight line in plan view.

4. Apparatus according to Claim 1, **characterized in that** the handling device (B) is configured as a robot gripping arm or gripping hand, a turntable and/or a rotatable suction device.

5. Apparatus according to any of the preceding claims, **characterized in that** the angle x has a magnitude from greater than 0° to 90° inclusive, preferably the angle x has a magnitude of 30°, 33°, 45°, 60°, 75° or 90°, particularly preferably 90°.

6. Apparatus according to any of the preceding claims, **characterized in that** the handling device (B) and/or the joining device (C) is/are fitted with a positioning device for the sheeting sections.

7. Process for producing an x°-tape which is a semifinished sheeting constructed from unidirectionally endless-fibre-reinforced sheeting sections, wherein the fibres are glass or carbon fibres or polymer fibres and are embedded in a matrix of polycarbonate and in this semifinished sheeting are aligned at an angle x having a magnitude from non-0° to 90° inclusive to the running direction of the x°-tape, comprising the following process steps:
(1) cutting the 0°-tape into sheeting sections;
(2) rotating the sheeting sections by the magnitude of the angle x;
(3) cohesively joining the sheeting sections to afford the x°-tape,
wherein the advancement direction of the 0°-tape, of the sheeting sections cut therefrom and of the x°-tape during production thereof is kept unchanged
and wherein
the 0°-tape has a thickness of 100 to 350 µm, preferably of 120 to 200 µm
and wherein
the process is performed on an apparatus according to any of Claims 1 to 6.

8. Process according to Claim 7, **characterized in that** before process step (1) process step
(0) feeding the 0°-tape
is performed and after process step (3) process step
(4) winding-up the x°-tape
is performed.

9. Process according to Claim 8, **characterized in that** during process steps (0) to (4) the advancement direction of the 0°-tape, of the sheeting sections cut therefrom and of the x°-tape during production thereof is kept unchanged.

## Revendications

1. Dispositif pour la fabrication semi-continue d'un ruban x°, qui est une bande de produit semi-fini formée à partir d'éléments de bande renforcés par des fibres continues unidirectionnelles, les fibres étant des fibres de verre ou de carbone ou des fibres polymères et étant incorporées dans une matrice de polycarbonate dans cette bande de produit semi-fini et étant orientées à un angle x d'un montant différent de 0° jusqu'à 90° inclus par rapport à la direction de déplacement du ruban x°, comprenant les composants principaux suivants :
(A) un appareil de découpe ;
(B) un appareil de manipulation ;
(C) un appareil de liaison,
qui se suivent les uns les autres dans le dispositif dans l'ordre indiqué, les composants principaux étant agencés de telle sorte que l'axe principal du dispositif forme une ligne droite dans la projection horizontale,
l'appareil de manipulation (B) étant approprié pour placer les uns après les autres les éléments de bande découpés à partir du ruban 0° dans le même plan tournés du montant de l'angle x dans la direction d'avancement du ruban 0°, de telle sorte que les côtés qui étaient des zones des côtés extérieurs parallèles les uns aux autres dans le ruban 0° soient disposés les uns en face des autres dans les éléments de bande, et l'appareil de liaison (C) étant approprié pour relier les éléments de bande en le ruban x° par accouplement de matière,
et
le ruban 0° ayant une épaisseur de 100 à 350 µm, de préférence de 120 à 200 µm.

2. Dispositif selon la revendication 1, **caractérisé en ce qu'**un appareil d'alimentation (F), une première unité de stockage (E) et un appareil de déroulement (D) sont agencés en amont de l'appareil de découpe (A), et un appareil de soutirage (G), une deuxième unité de stockage (H) et un appareil d'enroulement (J) sont agencés en aval de l'appareil de liaison (C), de manière à obtenir la succession appareil de déroulement (D) - unité de stockage (E) - appareil d'alimentation (F) - appareil de découpe (A) - appareil de manipulation (B) - appareil de liaison (C) - appareil de soutirage (G) - deuxième unité de stockage (H) - appareil d'enroulement (J).

3. Dispositif selon la revendication 2, **caractérisé en ce que** les composants principaux (A) à (C), l'appareil d'alimentation (F) et l'appareil de soutirage (G) sont agencés de telle sorte que l'axe principal du dispositif forme une ligne droite dans la projection horizontale.

4. Dispositif selon la revendication 1, **caractérisé en ce que** l'appareil de manipulation (B) est conçu sous la forme d'un bras de préhension ou d'une main de préhension robotique, d'un plateau tournant et/ou d'un appareil aspirant rotatif.

5. Dispositif selon l'une quelconque des revendications précédentes, **caractérisé en ce que** l'angle x a un montant supérieur à 0° et jusqu'à 90° inclus, de préférence l'angle x a un montant de 30°, 33°, 45°, 60°, 75° ou 90°, de manière particulièrement préférée 90°.

6. Dispositif selon l'une quelconque des revendications précédentes, **caractérisé en ce que** l'appareil de manipulation (B) et/ou l'appareil de liaison (C) sont équipés d'un appareil de positionnement pour les éléments de bande.

7. Procédé de fabrication d'un ruban x°, qui est une bande de produit semi-fini formée à partir d'éléments de bande renforcés par des fibres continues unidirectionnelles, les fibres étant des fibres de verre ou de carbone ou des fibres polymères et étant incorporées dans une matrice de polycarbonate et étant orientées dans cette bande de produit semi-fini à un angle x d'un montant différent de 0° jusqu'à 90° inclus par rapport à la direction de déplacement du ruban x°, comprenant les étapes de procédé suivantes :
(1) la découpe du ruban 0° en éléments de bande ;
(2) la rotation des éléments de bande du montant de l'angle x ;
(3) la liaison par accouplement de matière des éléments de bande en le ruban x°,
la direction d'avancement du ruban 0°, des éléments de bande découpés à partir de celui-ci et du ruban x° pendant la fabrication de celui-ci étant maintenue inchangée,
et
le ruban 0° ayant une épaisseur de 100 à 350 µm, de préférence de 120 à 200 µm,
et
le procédé étant réalisé sur un dispositif selon l'une quelconque des revendications 1 à 6.

8. Procédé selon la revendication 7, **caractérisé en ce qu'**avant l'étape de procédé (1), l'étape de procédé (0) l'alimentation du ruban 0°,
est réalisée et, après l'étape de procédé (3), l'étape de procédé
(4) l'enroulement du ruban x°
est réalisée.

9. Procédé selon la revendication 8, **caractérisé en ce que**, pendant les étapes de procédé (0) à (4), la direction d'avancement du ruban 0°, des éléments de bande découpés à partir de celui-ci et du ruban x° pendant la fabrication de celui-ci est maintenue inchangée.
